# EUROPEAN PATENT APPLICATION

(11) **EP 2 241 935 A1**
(43) Date of publication of application: **20.10.2010**
(21) Application number: 09252494.1
(22) Date of filing: 28.10.2009
(51) Int. Cl.: G03B 17/56, A45C 13/30, F16M 13/06, H01B 7/00, H01B 17/00, H04L 29/12, G06F 1/18, H04N 5/225

(54) **A strap with transmission line functionality**

(30) Priority: 17.04.2009 WO PCT/TW2009/006387
(71) Applicant: Aiptek International Inc., Hsin-Chu (TW)
(72) Inventor: Wu, Sandy, Hsin-Chu (TW); Chang, Chen Loon, Hsin-Chu (TW); Liu, Ching Tu, Hsin-Chu (TW); Hsieh, Chien Te, Hsin-Chu (TW)
(74) Representative: Pratt, David Martin

(57) **Abstract**

A strap (1) with transmission line functionality includes a strap body (11), a first connecting end (12) and a second connecting end (13). The strap body has at least one signal line (111) wrapped therein. The first connecting end is disposed at one end of the strap body and the second connecting end is disposed at an opposite end of the strap body so that signals can be transmitted between the first connecting end and the second connecting end via the signal line disposed in the strap body. The first connecting end (12) is directly fixed to and electrically connected with an electronic product (2), and a signal connector (131) is also disposed at the second connecting end (13) to connect with an external device. The strap body (11) is substantially looped into a circular form so as to be used as a wrist strap or a neck strap of the electronic product (2).

## Description

### BACKGROUND OF INVENTION

### 1. FIELD OF THE INVENTION

The present invention relates to a strap with transmission line functionality, and more particularly, to a strap incorporated in an electronic product and provided with transmission line functionality.

### 2. DESCRIPTION OF THE PRIOR ART

Owing to advancement of precision technologies in the electronics sector, development of electronic products commonly used all focus on light weight, low profile and miniaturized outline. For example, digital video cameras, digital cameras, MP3 or MP4 players and handheld communication devices are designed to have both remarkably decreased volume and decreased weight in order to be carried about by a user easily and to ease the burden of the user in carrying these electronic products.

As the electronic products get remarkably shrunk in both volume and weight, they tend to drop off when being handheld by the user during operation. Accordingly, products such as wrist straps or neck straps to be tied to electronic products have appeared. By using such a wrist strap or neck strap to bind an electronic product within a certain range of the user, damage to the electronic product due to drop-off from a slippery hand and even loss of the electronic product can be prevented.

However, to transmit signals stored in the electronic product to the outside, for example, to transmit images captured by a digital camera to a computer for editing or watching by a user or to dump MP3 files from a computer to an MP3 player or to present AV signals of a video camera on a screen, a transmission line for communication of electronic signals is needed to transmit the electronic signals. In such cases, a transmission line has to be carried additionally, which tends to cause inconveniences to the user.

Accordingly, an important objective of the present invention is to provide a strap with transmission line functionality, which not only serves as a neck strap or a wrist strap but is also provided with functionality of a transmission line. With such a strap, it will be unlikely for the user to forget to carry the transmission line of the electronic product, making it very convenient for the user to connect the electronic product and transmit data at any time as desired.

### SUMMARY OF INVENTION

The objective of the present invention is to provide a strap with transmission line functionality, which is not only a wrist strap or a neck strap tied to an electronic product but also serves the function of a transmission line for transmitting electronic signals. Thereby, the goal of carrying the transmission line of the electronic product about is accomplished.

In order to achieve aforementioned objective, the present invention discloses a strap with transmission line functionality. The strap is incorporated in an electronic product and comprises:
at least one strap body, having at least one signal line wrapped therein and being substantially looped into a circular form;
a first connecting end, being disposed at one end of the strap body and electrically connected with the signal line, wherein the first connecting end is directly fixed to and electrically connected with the electronic product; and
a second connecting end, being disposed at another end of the strap body opposite to the first connecting end and electrically connected with the signal line, wherein a signal connector is disposed at the second connecting end;
wherein the first connecting end and the second connecting end transmit signals therebetween by means of the signal line wrapped by the strap body.

In a preferred embodiment, the signal connector of the second connecting end is chosen from one of the following: a Universal Serial Bus (USB) male connector, a High-definition Multimedia Interface (HDMI) connector, an AV signal connector, and an IEEE-1394 interface connector.

In a preferred embodiment, the strap body wrapped around the signal line is made of a nylon thread material or an insulation rubber material.

In a preferred embodiment, the first connecting end is connected to an interior of the electronic product through soldering and is electrically connected with a circuit board of the electronic product.

In a preferred embodiment, connected between the first connecting end and the second connecting end are two strap bodies each having a signal line wrapped at a center thereof respectively, and the two strap bodies are flexibly bent to present a circular form therebetween so as to be hung on a user's wrist.

In a preferred embodiment, the electronic product is chosen from one of the following: a cell phone, a digital camera, a camcorder, a mobile disk, a computer, a TV set, a liquid crystal display (LCD) screen, an MP3 player, and an MP4 player.

### BRIEF DESCRIPTION OF THE DRAWINGS

The invention as well as a preferred mode of use, further objectives and advantages thereof will be best understood by reference to the following detailed description of an illustrative embodiment when read in conjunction with the accompanying drawings, wherein:
FIG. 1 is a schematic perspective view of a strap with transmission line functionality of the present invention;
FIG. 2 is a schematic cross-sectional view of the strap of the present invention;
FIG. 3 is a schematic view illustrating how the strap of the present invention is connected for signal transmission;
FIG. 4 is a schematic perspective view illustrating how a strap of another preferred embodiment of the present invention is connected with an electronic product; and
FIG. 5 is a schematic view illustrating how a strap of another preferred embodiment of the present invention is connected for signal transmission.

### DETAILED DESCRIPTION OF THE PREFERRED EMBODIMENT

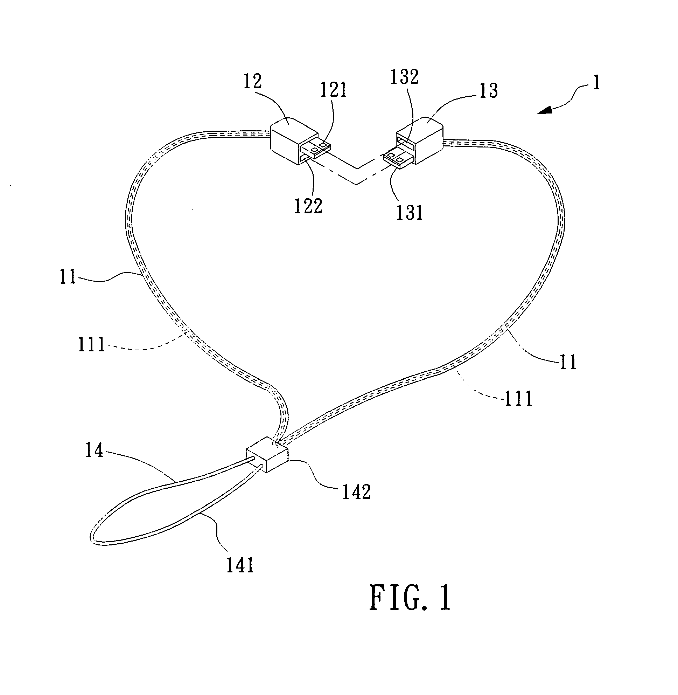

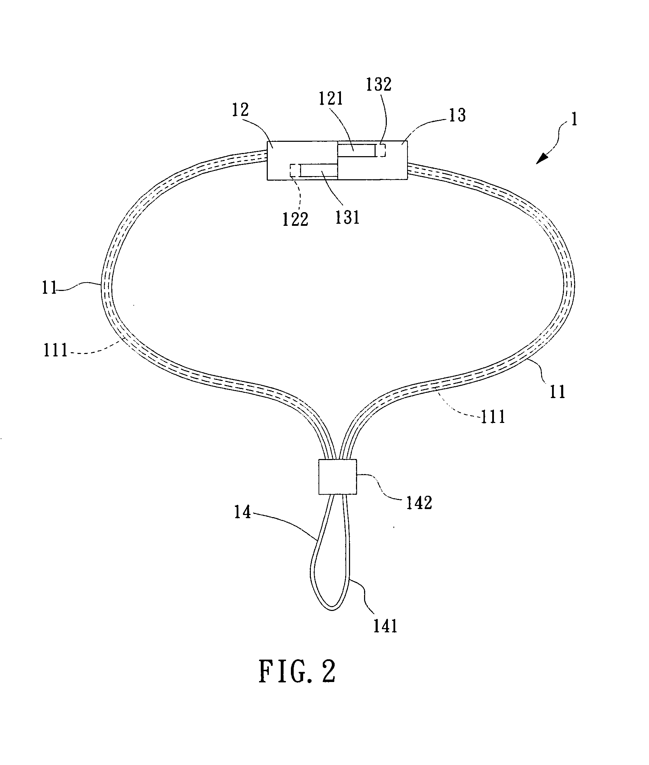

Referring to FIGS. 1 and 2, a strap 1 with transmission line functionality according to the present invention has a strap, which has functionality of a wrist strap or a neck strap, and a transmission line, which is used for an electronic product to which the strap is tied or fixed, integrated together. The strap 1 comprises at least one strap body 11, a first connecting end 12, a second connecting end 13 and a fixing end 14. The strap body 11 has at least one signal line 111 wrapped at a center thereof, and the strap body 11 wrapped around the signal line 111 may be made of one of a nylon thread material and an insulation rubber material.

The first connecting end 12 is disposed at one end of the strap body 11 and electrically connected with the signal line 111, while the second connecting end 13 is disposed at the other end of the strap body 11 opposite to the first connecting end 12 and electrically connected with the signal line 111. By means of the signal line 111 wrapped inside the center of the strap body 11, the first connecting end 12 and the second connecting end 13 transmit digital signals, power signals or other kinds of electric signals to each other.

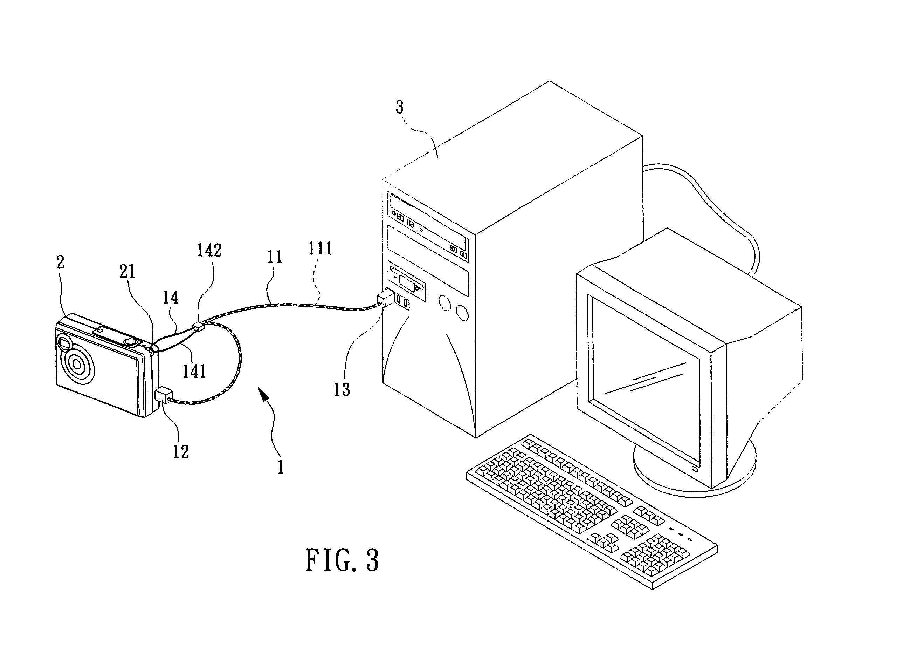

The first connecting end 12 further comprises a signal connector 121 and a receiving slot 122. The second connecting end 13 further comprises a signal connector 131 and a receiving slot 132. Each of the signal connectors 121, 131 has a plurality of contact pins therein and is electrically connected to the signal line 111 wrapped inside the strap body 11 respectively. The signal connectors 121, 131 may be one of the following specifications: a Universal Serial Bus (USB) male connector, a High-definition Multimedia Interface (HDMI) connector, an AV signal connector or an IEEE-1394 interface connector.
The receiving slot 122 of the first connecting end 12 allows the signal connector 131 of the second connecting end 13 to be inserted therein when the first connecting end 12 connects to the second connecting end 13. Similarly, the receiving slot 132 of the second connecting end 13 allows the signal connector 121 of the first connecting end 12 to be inserted therein. Thus, the first connecting end 12 and the second connecting end 13 at both ends of the strap body 11 can be fixedly connected together, and then the strap body 11 is looped into a substantially circular form to be hung on the user's body. Further, at a predetermined position on the strap body 11, a fixing end 14 is provided for connection with a connecting portion 21 of the electronic product 2 so that the fixing end 14 can be tied or fastened to the connecting portion 21 for use as a wrist strap, a neck strap or a strap. In this embodiment, the fixing end 14 comprises a string 141 made of a tough and flexible material that is looped into a circular form and an adapter 142 that is injection molded from a plastic material. The adapter 142 is used to fix the string 141 that has been looped into a circular form to the predetermined position of the strap body 11. The string 141 looped into a circular form is used to be inserted through a predetermined fastening hole (as shown in FIG. 3) of an electronic product 2.

Referring to FIG. 3, when the strap 1 with transmission line functionality of the present invention is used to transmit digital signals, the first connecting end 12 is attached to and electrically connected to the electronic product 2, and the other end (i.e., the second connecting end 13) is attached to and electrically connected to the other transmission end 3 (which is an external device) so that digital signals can be transmitted between the electronic product 2 and the transmission end 3 via the signal line 111 wrapped inside the strap body 11. The electronic product 2 and the transmission end 3 may be one of a cell phone, a digital camera, a camcorder, a mobile disk, a computer, a TV set, a liquid crystal display (LCD) screen, an MP3 player and an MP4 player respectively.

Through the strap 1 with transmission line functionality, transmission of digital signals can be accomplished between the electronic product 2 (e.g. a digital camera) and the transmission end 3 (e.g. a computer). For instance, by connecting the first connecting end 12 of the strap 1 with transmission line functionality to the electronic product 2 (i.e. the digital camera) and connecting the second connecting end 13 at the other end of the strap body 11 to the other transmission end 3 (i.e. the computer) as shown in FIG 3, digital data in the electronic product 2 (i.e. the digital camera) can be transmitted to the transmission end 3 (i.e. the computer) quickly via the signal line 111. Furthermore, by using the transmission end 3 (i.e. the computer) to perform such actions as editing, playback or storage, even more updated file data may be transmitted from the transmission end 3 (i.e. the computer) back to the electronic product 2 (i.e. the digital camera). Thus, bi-directional transmission is accomplished by means of the strap 1 with transmission line functionality.

In other preferred embodiments of the present invention to be described hereinbelow, most elements are identical or similar to those of the aforesaid embodiment, so identical elements and structures will not be further described herein. Moreover, identical elements will be denoted by the same designations and reference numerals, and similar elements will be denoted by the same designations but an English letter is added following the original reference numerals thereof for distinguishing purpose, both of which will not be further described herein.

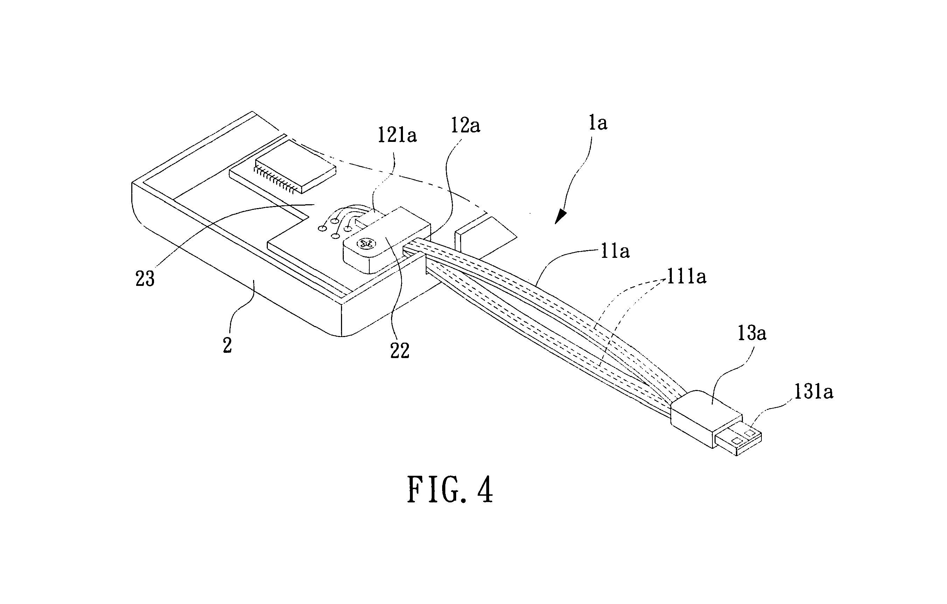

Referring to FIG. 4, another preferred embodiment of a strip 1a with transmission line functionality according to the present invention is shown therein. Through a connecting piece 22, the first connecting end 12a is fixed within a housing of the electronic product 2 and electrically connected to a circuit board 23 of the electronic product 2 through soldering. That is to say, signal pins of the signal connector 121 a of the first connecting end 12a are electrically connected to four pads of the circuit board 23 through wire bonding respectively, and the connecting end 12a is locked into the housing of the electronic product 2 by a screw via the connecting piece 22 to ensure secure connection and normal signal transmission between the connecting end 12a and the circuit board 23.

In the strap 1a with transmission line functionality, connected between the first connecting end 12a and the second connecting end 13a are two strap bodies 11a having a signal line 111a at the center thereof respectively, and the two strap bodies 11a can be flexibly bent to present a circular form therebetween. In this way, the circularized two strap bodies 11a can be sleeved around a wrist of the user so that the electronic product 2 can be hung on the user's wrist to prevent loss or drop-off of the electronic product 2.

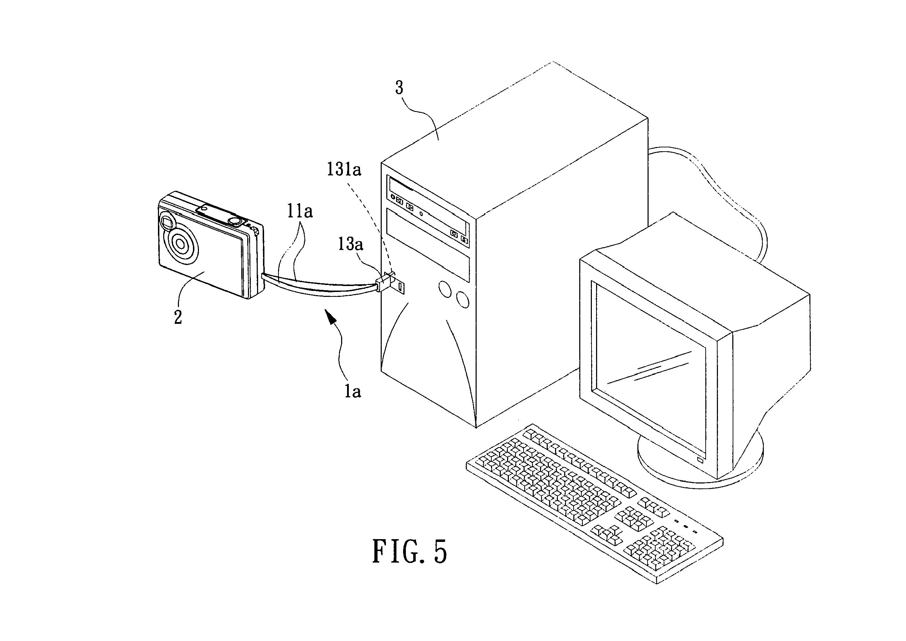

Referring to FIG. 5, for the strap 1a with transmission line functionality, the second connecting end 13a is adapted to be connected to the transmission end 3 (e.g., a computer) so that, via the signal connector 131a of the second connecting end 13a, digital signals outputted by the electronic product 2 (e.g., a digital camera) can be transmitted to the transmission end 3 via the strap bodies 11a.

In other words, the strap 1a with transmission line functionality is fixed in the housing of the electronic product 2 (i.e. the digital camera) by means of the connecting piece 22 (see FIG. 4) and extends outwards from within the electronic product 2 (i.e. the digital camera) directly. In this way, the electronic product 2 (i.e. the digital camera) and the strap 1a with transmission line functionality are integrated into one piece without having to tie the strap body 11 to the electronic product 2 by means of the fixing end 14 as in the preferred embodiment shown in FIG. 3.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A strap with transmission line functionality, being incorporated in an electronic product, the strap comprising:
at least one strap body, having at least one signal line wrapped therein and being substantially looped into a circular form;
a first connecting end, being disposed at one end of the strap body and electrically connected with the signal line, wherein the first connecting end is directly fixed to and electrically connected with the electronic product; and
a second connecting end, being disposed at another end of the strap body opposite to the first connecting end and electrically connected with the signal line, wherein a signal connector is disposed at the second connecting end;
wherein the first connecting end and the second connecting end transmit signals therebetween by means of the signal line wrapped by the strap body.

2. The strap with transmission line functionality of claim 1, wherein the signal connector of the second connecting end is chosen from one of the following: a Universal Serial Bus (USB) male connector, a High-definition Multimedia Interface (HDMI) connector, an AV signal connector, and an IEEE-1394 interface connector.

3. The strap with transmission line functionality of claim 1, wherein the strap body wrapped around the signal line is made of a nylon thread material or an insulation rubber material.

4. The strap with transmission line functionality of claim 1, wherein the first connecting end is connected to an interior of the electronic product through soldering and is electrically connected with a circuit board of the electronic product.

5. The strap with transmission line functionality of claim 1, wherein connected between the first connecting end and the second connecting end are two strap bodies each having a signal line wrapped at a center thereof respectively, and the two strap bodies are flexibly bent to present a circular form therebetween so as to be hung on a user's wrist.

6. The strap with transmission line functionality of Claim 1, wherein the electronic product is chosen from one of the following: a cell phone, a digital camera, a camcorder, a mobile disk, a computer, a TV set, a liquid crystal display (LCD) screen, an MP3 player, and an MP4 player.
